(19) Europäisches Patentamt
European Patent Office
Office européen des brevets

(11) **EP 2 850 779 B1**

(12) **FASCICULE DE BREVET EUROPEEN**

(45) Date de publication et mention de la délivrance du brevet:
**21.11.2018 Bulletin 2018/47**

(21) Numéro de dépôt: **13722413.5**

(22) Date de dépôt: **13.05.2013**

(51) Int Cl.:
***H04L 12/26*** *(2006.01)*

(86) Numéro de dépôt international:
**PCT/EP2013/059798**

(87) Numéro de publication internationale:
**WO 2013/171153 (21.11.2013 Gazette 2013/47)**

(54) **SYSTÈME DE SUPERVISION, PROCÉDÉ ET PROGRAMME D'ORDINATEUR CORRESPONDANT**

ÜBERWACHUNGSSYSTEM, VERFAHREN UND COMPUTERPROGRAMM

MONITORING SYSTEM AND CORRESPONDING METHOD AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.05.2012 FR 1254365**

(43) Date de publication de la demande:
**25.03.2015 Bulletin 2015/13**

(73) Titulaire: **C.R.T. Informatique**
**76230 Bois-Guillaume (FR)**

(72) Inventeurs:
• **MAILLET, Pierre-Yves**
**F-49330 Chateauneuf Sur Sarthe (FR)**
• **MAINFROID, Yohann**
**F-49600 Beaupreau (FR)**
• **VERINES, Jean-Pierre**
**F-75008 Paris (FR)**
• **VOISIN, Christophe**
**F-49070 Saint Lambert La Potherie (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2004 061 701     US-B1- 7 478 151**
**US-B2- 7 437 453**

**Description**

La présente invention concerne la supervision d'au moins un paramètre dans un système de supervision destiné à fournir des informations de supervision de chaque dit paramètre à au moins un dispositif de restitution.

Les systèmes de supervision permettent de suivre l'évolution de paramètres variés en fonction du corps de métier de celui qui l'utilise. Les valeurs de ces paramètres sont recueillies en temps réel, c'est-à-dire selon une fréquence d'acquisition adaptée au paramètre supervisé, puis analysées. Le résultat de ces analyses, spécifiques à chaque corps de métier, est restitué à l'utilisateur, par exemple via un écran. Des seuils d'alerte sont en général définis, afin d'avertir l'utilisateur lorsque la valeur d'un paramètre supervisé franchit un tel seuil.

Le problème des systèmes de supervision actuels est qu'ils sont spécifiques pour chaque application, c'est-à-dire pour chaque corps de métier et chaque paramètre supervisé. Cela entraîne des temps et coûts de développement et de maintenance excessifs, et pose un problème de réutilisabilité d'un système de supervision à l'autre. Cela pose en outre un problème lié à la complexité de configuration du système de supervision. En effet, les systèmes de supervision actuels nécessitent à la fois des connaissances dans la mise en oeuvre de la structure d'un tel système de supervision et des connaissances dans le corps de métier auquel les paramètres supervisés sont relatifs.

US 7,437,453 B2 par exemple décrit un mécanisme de surveillance dans un réseau informatique. Un centre de gestion réseau (Network Management Center) établit des expressions pour définir des règles d'alarme, qui sont envoyées à des dispositifs (managed devices) que l'on pourrait assimiler à des dispositifs collecteurs selon les termes de l'invention revendiquée. Chaque dispositif (managed devices) vérifie le résultat de l'expression. Lorsque le résultat de l'expression dépasse un seuil, une procédure (preset process) préétablie par le centre de gestion réseau (Network Management Center), telle que l'envoi d'un message Trap, est exécutée.

US 7,478,151 B1 décrit un mécanisme de surveillance des performances d'un réseau de communication dans lequel les résultats de la surveillance sont fournis à un utilisateur via une interface graphique.

Il est souhaitable de pallier ces différents inconvénients de l'état de la technique.

Il est notamment souhaitable de fournir une solution qui permette d'accroître la réutilisabilité de modules d'un système de supervision à l'autre, afin de réduire les temps et coûts de développement et de maintenance.

Il est aussi souhaitable de fournir une solution qui permette à un utilisateur de superviser des paramètres, qui évoluent dans le temps, sans avoir de connaissances particulières dans le domaine de la configuration d'un système de supervision.

L'invention concerne un système de supervision d'au moins un paramètre, ledit système étant destiné à fournir des informations de supervision de chaque dit paramètre à au moins un dispositif de restitution, ledit système comportant au moins un dispositif collecteur adapté pour collecter des valeurs d'au moins un dit paramètre à différents instants. Le système de supervision est tel qu'il comporte en outre des moyens de configuration d'au moins un seuil représentatif d'une transition entre deux états de chaque paramètre, et des moyens de coordination adaptés pour : recevoir de chaque dispositif collecteur des structures de données, chaque structure de données comportant une valeur collectée d'un dit paramètre, ledit seuil et un état obtenu par comparaison entre ladite valeur collectée et ledit seuil ; et fournir au dispositif de restitution lesdites informations de supervision sur la base des structures de données reçues. Ainsi, la réutilisabilité de modules d'un système de supervision à l'autre est accrue, ce qui permet de réduire les temps et coûts de développement et de maintenance du système de supervision.

Selon un mode de réalisation particulier, les moyens de configuration permettent de configurer une interface utilisateur de restitution des informations de supervision, dans laquelle chaque paramètre est représenté par un objet graphique, et les moyens de configuration permettent de décrire chaque objet graphique par un objet logiciel comportant au moins une dite structure de données et des règles de rendu permettant de déterminer le rendu de chaque objet graphique en fonction de l'état dudit paramètre.

Selon un mode de réalisation particulier, les moyens de coordination sont adaptés pour fournir au dispositif de restitution, pour au moins un dit paramètre, des objets logiciels comportant lesdites structures de données reçues.

Selon un mode de réalisation particulier, les moyens de coordination comportent des moyens de détermination de rendu d'objets graphiques en fonction de structures de données reçues par application desdites règles de rendu, et les moyens de coordination sont adaptés pour fournir au dispositif de restitution, pour au moins un dit paramètre, ledit objet graphique résultant de l'application desdites règles de rendu.

Selon un mode de réalisation particulier, des objets graphiques sont représentatifs d'historiques de valeurs de dits paramètres, et chaque dispositif collecteur stocke des structures de données pour chaque paramètre collecté à différents instants.

Selon un mode de réalisation particulier, des objets logiciels comportent plusieurs dites structures de données reçues correspondant à des paramètres distincts, et les moyens de configuration de ladite interface utilisateur comportent des moyens de définir des règles, incluses dans lesdits objets logiciels, de rendu desdits objets graphiques en fonction des états que comportent lesdites structures de données.

Selon un mode de réalisation particulier, lorsqu'un dit dispositif collecteur détecte une erreur de collecte d'une valeur de paramètre, ledit dispositif collecteur est adapté pour fournir aux moyens de coordination une dite structure de données dont la valeur de paramètre est représentative d'une erreur, et le rendu de chaque objet graphique est représentatif d'une erreur, lorsque l'objet logiciel auquel l'objet graphique est associé comporte une telle structure de données.

Selon un mode de réalisation particulier, chaque dispositif collecteur est connecté à au moins un dispositif de capture et : chaque dispositif de capture est adapté pour capturer et stocker des valeurs de dit paramètre ; chaque dispositif collecteur est adapté pour obtenir auprès de chaque dispositif de capture lesdites valeurs stockées ; et chaque dispositif collecteur est adapté pour générer lesdites structures de données à partir des valeurs obtenues auprès de chaque dispositif de capture et pour fournir lesdites structures de données auxdits moyens de coordination.

Selon un mode de réalisation particulier, lesdits moyens de coordination étant destinés à être partagés par plusieurs systèmes de supervision, l'interface utilisateur est associée à un espace client, chaque objet logiciel comporte un identifiant unique constitué de plusieurs champs parmi : un champ d'identification d'un serveur implémentant le dispositif de capture adapté pour capturer les valeurs du paramètre auquel l'objet logiciel est associé ; un champ d'identification du dispositif de capture sur ledit serveur ; un champ d'identification d'un hôte fournissant le paramètre supervisé ; un champ d'identification d'un service fournit par ledit hôte et auquel le paramètre supervisé est relatif. En outre, les moyens de configuration permettent de définir l'espace client par application d'un filtre sur au moins un desdits champs.

L'invention concerne également un procédé de supervision d'au moins un paramètre par un système de supervision, ledit système étant destiné à fournir des informations de supervision de chaque dit paramètre à au moins un dispositif de restitution, ledit procédé comportant une étape de collecte par au moins un dispositif collecteur de valeurs d'au moins un dit paramètre à différents instants, caractérisé en ce qu'il comporte en outre une étape de configuration d'au moins un seuil représentatif d'une transition entre deux états de chaque paramètre, et les étapes suivantes : réception, par des moyens de coordination et en provenance de chaque dispositif collecteur, de structures de données, chaque structure de données comportant une valeur collectée d'un dit paramètre, ledit seuil et un état obtenu par comparaison entre ladite valeur collectée et ledit seuil ; et fourniture desdites informations de supervision sur la base des structures de données reçues.

L'invention concerne également un programme d'ordinateur, qui peut être stocké sur un support et/ou téléchargé d'un réseau de communication, afin d'être lu par un système informatique. Ce programme d'ordinateur comprend des instructions pour causer une mise en oeuvre du procédé mentionné ci-dessus, lorsque ledit programme est exécuté par au moins un processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1A illustre schématiquement un système de supervision selon la présente invention ;
- la Fig. 1B illustre schématiquement une architecture de dispositif coordinateur du système de supervision ;
- la Fig. 2 illustre schématiquement un algorithme mis en oeuvre par un dispositif collecteur du système de supervision ;
- les Figs. 3A et 3B illustrent schématiquement des algorithmes mis en oeuvre par un dispositif séquenceur du système de supervision ;
- les Figs. 4 et 5 illustrent schématiquement des algorithmes mis en oeuvre par le dispositif coordinateur du système de supervision ;
- la Fig. 6 illustre schématiquement un algorithme mis en oeuvre par un dispositif de restitution d'informations de supervision.

La présente invention repose sur la mise en oeuvre d'une structure de données, notée S par la suite, comportant une valeur collectée d'un paramètre supervisé, d'au moins un seuil représentatif d'une transition entre deux états du paramètre et d'un état obtenu par comparaison entre cette valeur collectée et ce seuil.

Cette structure de données S est transmise depuis des dispositifs collecteurs, en charge de collecter les valeurs de paramètres supervisés et un dispositif coordinateur, en charge de coordonner les différents dispositifs constituant le système de supervision et de fournir des informations de supervision à des terminaux utilisateur. Ainsi, chaque valeur de paramètre supervisé est transmise avec les données, ou informations, qui lui sont relatives. Cela permet de rendre le dispositif coordinateur générique, celui-ci ne traitant que des structures S, et ce indépendamment du paramètre supervisé. Cela permet aussi de définir des interfaces utilisateurs grâce à des objets graphiques dont le comportement est lui-aussi générique, c'est-à-dire indépendant du paramètre supervisé.

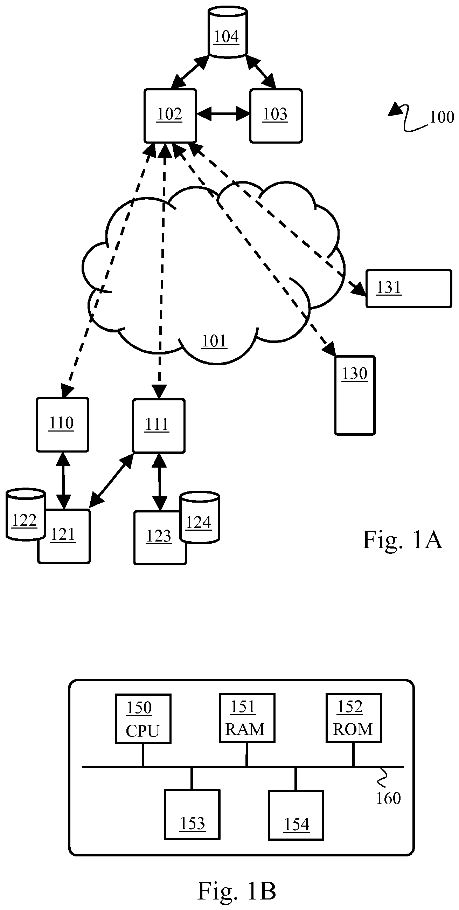

La Fig. 1A illustre schématiquement un système de supervision comprenant un dispositif coordinateur 102, un dispositif configurateur 103 et au moins un dispositif collecteur 110, 111. Le dispositif coordinateur 102 est interconnecté aux dispositifs collecteurs 110, 111 via un réseau de communication 101. Le dispositif coordinateur 102 est aussi interconnecté au dispositif configurateur 103. Cette interconnexion peut être mise en oeuvre via le réseau de communication 101. Le dispositif configurateur 103 et le dispositif coordinateur 102 partagent l'accès à une base de données 104. Le dispositif configurateur 103 peut aussi être inclus dans le dispositif coordinateur 102.

Les dispositifs collecteurs 110, 111 sont interconnectés à des dispositifs de capture 121, 123. Un même dispositif collecteur peut être interconnecté à plusieurs dispositifs de capture, et vice versa. Chaque dispositif de capture 121, 123 dispose d'une base de données 122, 124, permettant de stocker les valeurs des paramètres faisant l'objet de la supervision. Les dispositifs de capture 121, 123, et leurs bases de données respectives 122, 124, peuvent faire partie du système de supervision.

Les dispositifs de capture 121, 123 récupèrent les valeurs des paramètres qu'ils sont respectivement chargés de superviser. Chaque dispositif de capture 121, 123 met en oeuvre au moins un protocole d'acquisition de valeurs, tel que par exemple le protocole SNMP (« Simple Network Management Protocol » en anglais, tel que défini dans le document normatif RFC 1157). La fréquence à laquelle les dispositifs de capture 121, 123 récupèrent les valeurs des paramètres est définie en fonction du type du paramètre supervisé. Par exemple, la fréquence de scrutation de l'évolution du CAC40 est beaucoup plus contraignante que celle de l'évolution de la température ambiante ou du taux d'humidité d'une pièce.

Les dispositifs collecteurs 110, 111 obtiennent les valeurs des paramètres supervisés, qui sont récupérées par les dispositifs de capture 121, 123, et les formatent selon la structure de données S. La structure de données S ainsi formatée comporte au moins la valeur collectée du paramètre considéré, la valeur de chaque seuil défini pour ce paramètre et l'état du paramètre. La structure de données S peut en outre comporter des informations complémentaires, telles que des bornes inférieure et supérieure du paramètre supervisé, l'unité dans laquelle ladite valeur est indiquée, ou l'instant auquel la valeur a été collectée.

Le dispositif coordinateur 102 est interconnecté à des dispositifs de restitution 130, 131, via le réseau de communication 101. Les dispositifs de restitution 130, 131 sont des équipements d'interface avec un utilisateur désireux de superviser les paramètres, tels que des téléphones intelligents (« smartphone » en anglais), des tablettes ou autre équipements électroniques. Les dispositifs de restitution 130, 131 disposent préférentiellement de capacités d'affichage d'une interface utilisateur de type graphique, mais peuvent aussi être des dispositifs offrant une interface utilisateur de type sonore, par exemple par message vocal, ou de type textuel, par exemple par SMS (« Short Message Service » en anglais) ou courriel. Les dispositifs de restitution 130, 131 peuvent faire partie du système de supervision. Préférentiellement, chaque dispositif de restitution 130, 131 dispose d'un module logiciel adapté à la supervision des paramètres et faisant partie du système de supervision.

Afin qu'un changement d'état, ou une valeur, d'un paramètre supervisé soit répercuté de manière homogène sur l'ensemble des dispositifs de restitution qui supervisent ce paramètre, le dispositif coordinateur 102 met en oeuvre une technique de transmission de type « push » (« pousser » en français). Ainsi, c'est au dispositif coordinateur 102 d'alerter les dispositifs de restitution 130, 131, du changement d'état, et non aux dispositifs de restitution 130, 131, de questionner le dispositif coordinateur 102 sur l'état du paramètre supervisé. En cas de changement d'état ou de valeur, le dispositif coordinateur 102 détermine les dispositifs de restitution qui supervisent ce paramètre, et leur transmet l'information de supervision de manière simultanée. Les interfaces utilisateurs de ces dispositifs de restitution sont ainsi synchronisées en temps réel.

Le dispositif coordinateur 102 assure la coordination entre les différents dispositifs du système de supervision. Le dispositif coordinateur 102 associe les valeurs des paramètres supervisés, qui sont obtenues par les dispositifs collecteurs 110, 111, à une interface utilisateur configurée par l'utilisateur via le dispositif configurateur 103, et transmet aux dispositifs de restitution 130, 131, les informations nécessaires pour pouvoir fournir cette interface utilisateur à l'utilisateur.

Le dispositif configurateur 103 permet à l'utilisateur, ou un opérateur du système de supervision, de configurer le système de supervision et de définir les interfaces utilisateurs fournies par les dispositifs de restitution 130, 131. Le dispositif configurateur 103 dispose ainsi de moyens de configuration pour permettre à l'utilisateur de choisir les paramètres qu'il souhaite effectivement surveiller parmi ceux supervisés par les dispositifs de capture 121, 123, et de définir l'interface utilisateur applicable en fonction du type de dispositif de restitution. En effet, la capacité d'affichage d'un écran de téléphone intelligent diffère de celle d'un écran Haute-Définition. Les données de configuration de l'interface utilisateur sont stockées par le dispositif configurateur 103 dans la base de données 104, à laquelle le dispositif coordinateur accède pour transmettre aux dispositifs de restitution 130, 131, les informations nécessaires à la génération effective de l'interface utilisateur.

Ces moyens de configuration permettent en outre à l'utilisateur de définir, pour chaque paramètre supervisé, une pluralité d'états et au moins un seuil représentatif d'une transition entre deux états. Par exemple, lorsque le paramètre est le taux de charge d'un réseau de communication, un premier état peut être « sous-utilisé », un second état peut être « normal » et un troisième état peut être « congestionné », et un premier seuil entre les premier et second états peut être défini à 40% et un second seuil entre les second et troisième états peut être défini à 75%. Ces moyens de configuration peuvent permettent en outre à l'utilisateur de définir des informations et/ou des contraintes supplémentaires relatives au paramètre supervisé, tel que des bornes inférieure et supérieure, ou une fréquence de collecte des valeurs du paramètre supervisé. Ces données sont transmises aux dispositifs collecteurs 110, 111 et/ou aux dispositifs de capture 121, 123, afin de remplir de manière adéquate les structures de données déjà mentionnées.

Ces moyens de configuration permettent aussi à l'utilisateur de définir, pour chaque paramètre supervisé, un objet graphique G à afficher via l'interface utilisateur. L'objet graphique G a un rendu différent selon l'état du paramètre supervisé. Chaque objet graphique G est donc associé à une structure de données S. Cette association se fait par le biais d'un objet logiciel O, qui comporte la structure S, l'objet graphique G sous toutes ses formes possibles et des règles qui définissent le rendu de l'objet graphique G en fonction de l'état du paramètre supervisé, tel qu'indiqué dans la structure S. On entend par « objet logiciel » une instance de classe développée en langage de programmation orientée objet. En reprenant l'exemple ci-dessus, l'objet graphique G peut être un feu tricolore, dont les règles de rendu sont les suivantes : aucun feu allumé lorsque l'objet logiciel contient une structure d'erreur E, telle que définie ci-après ; un feu vert allumé lorsque l'état est « sous-utilisé » ; un feu orange allumé lorsque l'état est « normal ; et un feu rouge allumé lorsque l'état est « congestionné ».

Ces moyens de configuration permettent en outre à l'utilisateur d'associer un seul et même objet graphique G à plusieurs paramètres supervisés. Dans ce cas, un seul et même objet logiciel O comporte plusieurs structures de données S relatives à des paramètres supervisés respectifs. Les moyens de configuration permettent alors de définir des règles, incluses dans lesdits objets logiciels, de rendu de l'objet graphique G en fonction des états que comportent lesdites structures de données S.

Dans une variante de réalisation, les seuils et états peuvent être prédéfinis en fonction du paramètre supervisé. Cette configuration peut être mise en oeuvre au niveau des dispositifs de capture 121, 123. Les dispositifs collecteurs 110, 111, récupèrent alors ces informations auprès des dispositifs de capture 121, 123, pour construire les structures de données S.

La Fig. 1B illustre schématiquement un exemple d'architecture du dispositif coordinateur 102.

Le dispositif coordinateur 102 comprend, reliés par un bus de communication 160 : un processeur ou CPU (« Central Processing Unit » en anglais) 150 ; une mémoire vive RAM (« Random Access Memory» en anglais) 151 ; une mémoire morte ROM (« Read Only Memory » en anglais) 152; une interface de communication 154 avec le réseau de communication 101 ; et une unité de stockage ou un lecteur de support de stockage, tel qu'un disque dur HDD (« Hard Disk Drive » en anglais) 153.

Les dispositifs collecteurs 110, 111, le dispositif configurateur 103, les dispositifs de restitution 130, 131, et les dispositifs de capture 121, 123 peuvent être construits sur le même modèle d'architecture.

Le processeur 150 est capable d'exécuter des instructions chargées dans la RAM 151 à partir de la ROM 152, d'une mémoire externe (non représentée), d'un support de stockage, tel que le disque dur HDD 153, ou d'un réseau de communication. Lorsque le dispositif concerné est mis sous tension, le processeur 150 est capable de lire de la RAM 151 des instructions et de les exécuter. Ces instructions forment un programme d'ordinateur causant la mise en oeuvre, par le processeur 150, de tout ou partie des algorithmes décrits ci-après.

Tout ou partie des algorithmes décrits ci-après peut être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

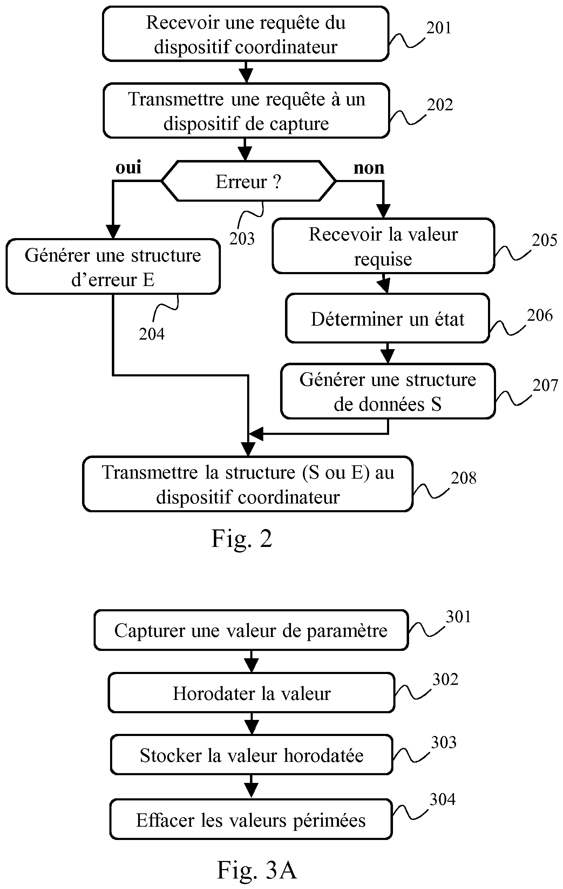

La Fig. 2 illustre schématiquement un algorithme mis en oeuvre par un dispositif collecteur, tel que le dispositif collecteur 110.

Dans une étape 201, le dispositif collecteur 110 reçoit, en provenance du dispositif coordinateur 102, une requête de récupération d'une valeur d'un paramètre supervisé. Dans une étape 202 suivante, le dispositif collecteur 110 transmet à un dispositif de capture, tel que le dispositif de capture 121, une requête de récupération de la valeur du paramètre supervisé. Un même paramètre peut être supervisé par plusieurs dispositifs de capture. Ainsi, si cette requête échoue avec un dispositif de capture primaire, elle peut être renouvelée avec un dispositif de capture secondaire.

Dans une étape 203 suivante, le dispositif collecteur 110 détermine s'il a obtenu la valeur requise du paramètre supervisé. Si tel est le cas, une étape 205 est effectuée ; sinon, une étape 204 est effectuée.

Dans l'étape 204, le dispositif collecteur 110 génère une structure d'erreur E représentative d'une erreur dans la récupération de la valeur du paramètre. Cette structure de données E, dite structure d'erreur, est une structure de données S dans laquelle la valeur du paramètre est rendue égale à une valeur prédéfinie, par exemple de type « unknown » (« inconnu » en français). Formater une notification d'erreur sous la forme d'une structure de données S particulière permet que le dispositif coordinateur 102 la gère comme une valeur de paramètre supervisé. Le dispositif coordinateur n'est donc pas particularisé pour le traitement des cas d'erreur. Une étape 208 est ensuite effectuée.

Dans l'étape 205, le dispositif collecteur 110 reçoit la valeur requise du paramètre supervisé, en provenance du dispositif de capture 121.

Dans une étape 206 suivante, le dispositif collecteur 110 détermine l'état du paramètre supervisé, en comparant la valeur reçue avec le(s) seuil(s) associé(s) à ce paramètre.

Dans une étape 207 suivante, le dispositif collecteur 110 génère une structure de données S indiquant la valeur du paramètre supervisé, le(s) seuil(s) associé(s) à ce paramètre et l'état du paramètre déterminé à l'étape 206. Cette structure peut en outre contenir des informations complémentaires, comme par exemple les bornes applicables au paramètre ou une unité dans laquelle ladite valeur est indiquée. En d'autres termes, le dispositif collecteur 110 formate les données relatives au paramètre sous une forme générique qui facilite sa manipulation par le dispositif coordinateur 102 et par les dispositifs de restitution 130, 131. L'étape 208 est ensuite effectuée.

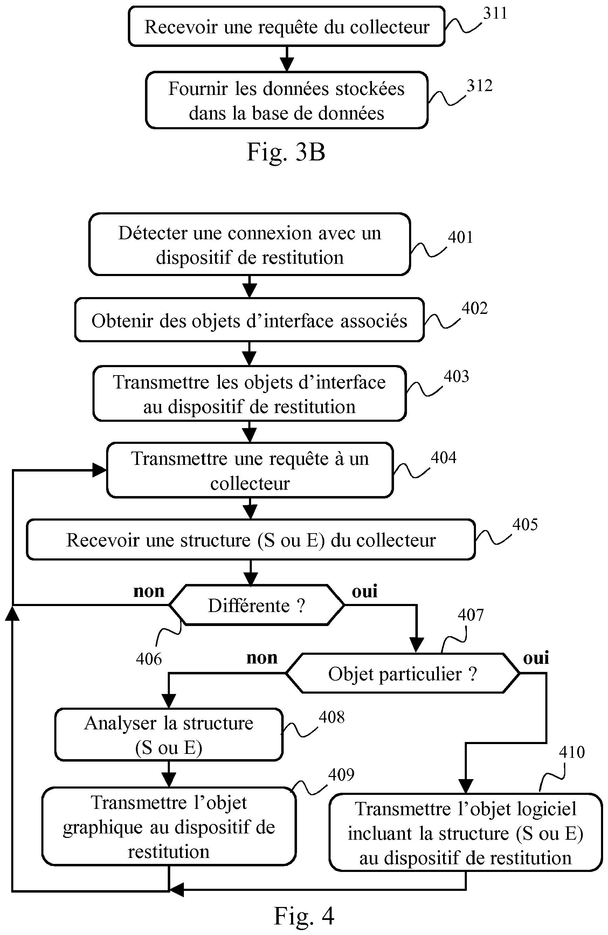

Dans l'étape 208, le dispositif collecteur 110 transmet au dispositif coordinateur 102 la structure de données S ou d'erreur E précédemment générée. Comme évoqué ci-après en relation avec les Figs. 3B et 4, cette transmission peut s'effectuer via une mémoire partagée par le dispositif collecteur 110 et le dispositif coordinateur 102.

La Fig. 3A illustre schématiquement un algorithme mis en oeuvre par un dispositif de capture, tel que le dispositif de capture 121, pour mettre à disposition du système de supervision des valeurs de paramètre supervisé.

Dans une étape 301, le dispositif de capture 121 obtient, ou capture, une valeur de paramètre supervisé par le dispositif de capture 121.

Dans une étape 302 suivante, le dispositif de capture 121 obtient une information représentative de l'instant auquel la valeur du paramètre supervisé est obtenue et horodate cette valeur.

Dans une étape 303 suivante, le dispositif de capture 121 stocke la valeur horodatée dans la base de données 122, afin de la mettre à disposition du dispositif collecteur 110, et éventuellement du dispositif collecteur 111.

Dans une étape 304 suivante, le dispositif de capture 121 détecte les valeurs périmées dans la base de données 122 et les efface. Par exemple, une profondeur temporelle est définie et toutes les valeurs stockées dont l'horodatage montre qu'elles ont été obtenues depuis un laps de temps supérieur à cette profondeur sont effacées.

La Fig. 3B illustre schématiquement un algorithme mis en oeuvre par un dispositif de capture, tel que le dispositif de capture 121, pour fournir les valeurs de paramètre supervisé au système de supervision.

Dans une étape 311, le dispositif de capture 121 reçoit une requête de récupération d'une valeur d'un paramètre supervisé en provenance d'un dispositif collecteur, tel que le dispositif collecteur 110. Cette requête correspond à celle transmise à l'étape 202. Une telle requête peut comporter une information indiquant si c'est la dernière valeur stockée qui est requise ou une valeur précédente.

Dans une étape 312, le dispositif de capture 121 récupère la valeur requise dans la base de données 122 et la transmet au dispositif collecteur 110. Si la requête comporte une information indiquant si c'est la dernière valeur stockée qui est requise ou une valeur précédente, le dispositif de capture 121 utilise l'horodatage des valeurs du paramètre supervisé pour sélectionner la valeur à retourner au dispositif collecteur.

Le même processus est mis en oeuvre par le dispositif collecteur 110 pour fournir au dispositif coordinateur 102 les structures de données S. Dans ce cas, dans l'étape 311, le dispositif collecteur 110 reçoit une requête de récupération d'une telle structure de données S pour un paramètre supervisé donné. Cette requête peut aussi comporter une information indiquant si c'est la dernière valeur du paramètre supervisé qui est requise ou une valeur précédente. Dans l'étape 312, le dispositif collecteur 110 obtient la structure de données S requise et la transmet au dispositif coordinateur 102. Dans une variante de réalisation, une mémoire partagée par le dispositif de capture 121 et le dispositif coordinateur 102 est mise en oeuvre. Le dispositif collecteur 110 écrit à son rythme dans la mémoire partagée et le dispositif coordinateur 102 lit à son rythme le contenu de cette mémoire partagée. Cela facilite la gestion de l'asynchronisme des traitements effectués par le dispositif collecteur 110 et le dispositif coordinateur 102.

La Fig. 4 illustre schématiquement un algorithme mis en oeuvre par le dispositif coordinateur 102 pour fournir des informations de supervision à un dispositif de restitution, tel que le dispositif de restitution 130.

Dans une étape 401, le dispositif coordinateur 102 détecte une connexion avec le dispositif de restitution 130. Le dispositif de restitution 130 a justifié de ses droits d'accès aux données du système de supervision et est authentifié auprès du dispositif coordinateur 102. Le type du dispositif de restitution 130 est connu du dispositif coordinateur 102, ce qui donne une indication de l'interface utilisateur à fournir.

Dans une étape 402 suivante, le dispositif coordinateur 102 obtient des objets logiciels O représentatifs des objets graphiques constituant l'interface utilisateur associée au dispositif de restitution 130, en fonction de son type. Ces objets logiciels O sont récupérés par le dispositif coordinateur 102 dans la base de données 104. Ces objets logiciels O sont rendus disponibles dans la base de données 104, suite à une opération de configuration par le dispositif configurateur 103. Selon le rendu final de l'objet graphique G qu'ils représentent, les règles de rendu de ces objets logiciels O sont soit appliquées par le dispositif de restitution 130, soit par le dispositif coordinateur 102.

Dans une étape 403 suivante, le dispositif coordinateur 102 transmet les objets logiciels O au dispositif de restitution 130. Par défaut, ces objets logiciels comportent des structures d'erreur E. Le dispositif coordinateur 102 peut aussi transmettre directement des objets graphiques au dispositif de restitution 130.

Dans un mode de réalisation particulier, le dispositif coordinateur 102 obtient, par exemple de la mémoire partagée, les structures de données S relatives aux objets logiciels O, met à jour les objets logiciels O en conséquence, puis transmet les objets logiciels O au dispositif de restitution 130.

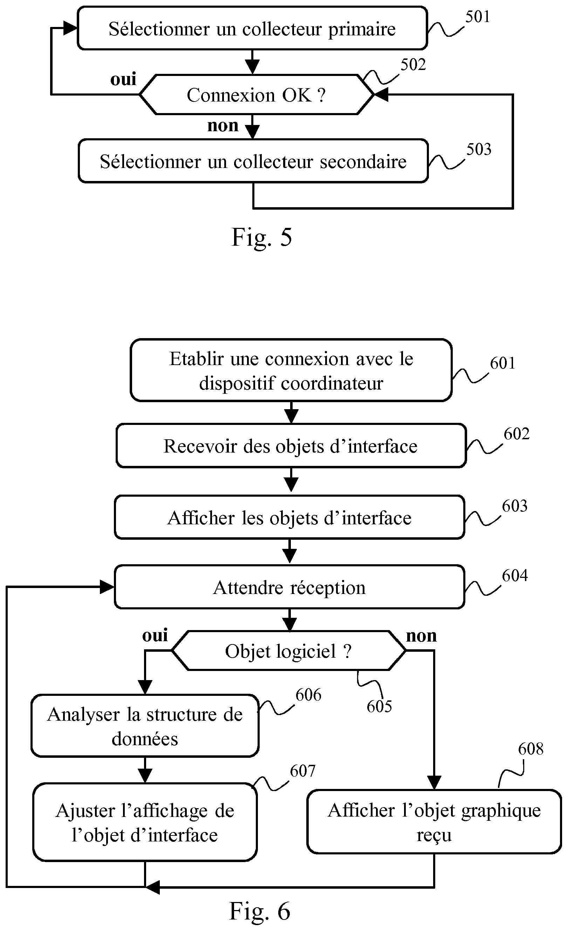

Dans une étape 404 suivante, le dispositif coordinateur 102 transmet à au moins un dispositif collecteur, tel que le dispositif collecteur 110, une requête de récupération d'une structure de données S associée à chaque paramètre qui est supervisé via l'interface utilisateur. Le dispositif coordinateur 102 peut disposer de plusieurs dispositifs collecteurs pour obtenir les valeurs relatives à un même paramètre supervisé. Cette situation est traitée ci-après en relation avec la Fig. 5.

Dans une étape 405 suivante, le dispositif coordinateur 102 reçoit du dispositif collecteur 110 une structure de données S correspondant au paramètre, en réponse à la requête transmise à l'étape 404. Le dispositif coordinateur 102 stocke cette structure de données et écrase de préférence la précédente structure de données reçue pour ce paramètre.

En variante, comme déjà mentionné, une mémoire partagée peut être mise en oeuvre entre le dispositif collecteur 110 et le dispositif coordinateur 102. Dans ce cas, le dispositif coordinateur obtient en lisant la mémoire partagée la structure de données S correspondant au paramètre écrite par le dispositif collecteur 110.

Dans une étape 406 suivante, le dispositif coordinateur 102 détermine si la structure de données S reçue est différente de celle précédemment reçue pour ce paramètre. Si tel est le cas, une étape 407 est effectuée ; sinon, l'étape 404 est répétée pour ce paramètre ou un autre, selon les mises à jour d'affichage restant à effectuer. Le dispositif coordinateur 102 stocke au préalable la structure de données S nouvellement reçue et écrase de préférence celle précédemment reçue.

Dans l'étape 407, le dispositif coordinateur 102 détermine si l'objet de l'interface utilisateur, qui est associé à la structure de données S reçue à l'étape 405 est un objet particulier, c'est-à-dire un objet dont le rendu est à déterminer par le dispositif coordinateur 102. Si tel est le cas, une étape 410 est effectuée ; sinon, une étape 408 est effectuée. Laisser le dispositif coordinateur 102 déterminer le rendu de l'objet graphique G permet d'assurer que le rendu soit homogène quel que soit le type de dispositif de restitution.

Dans l'étape 408, le dispositif coordinateur 102 analyse la structure de données S reçue, en déterminant notamment l'état du paramètre, tel qu'indiqué dans la structure de données reçue à l'étape 405. Le dispositif coordinateur 102 détermine l'objet graphique G, en fonction des règles de rendu contenues dans l'objet logiciel comportant la structure de données S.

Dans une étape 409 suivante, le dispositif coordinateur 102 transmet l'objet graphique G à afficher au dispositif de restitution 130. L'étape 404 est ensuite répétée pour ce paramètre ou un autre, selon les mises à jour d'affichage restant à effectuer.

Dans l'étape 410, le dispositif coordinateur 102 transmet l'objet logiciel O au dispositif de restitution 130, c'est-à-dire y compris la structure de données S reçue à l'étape 405. Le dispositif de restitution 130 est alors en charge d'en effectuer l'analyse et d'appliquer les règles de rendu afin d'obtenir l'objet graphique G à afficher. L'étape 404 est ensuite répétée pour ce paramètre ou un autre, selon les mises à jour d'affichage restant à effectuer.

Le dispositif coordinateur 102 permet ainsi que l'interface utilisateur soit mise à jour à chaque modification d'état d'un paramètre supervisé. Afin de limiter les quantités de données échangées entre le dispositif coordinateur 102 et le dispositif de restitution 130, seules les données relatives à des objets graphiques G devant être mis à jour sont transmises suite à cette modification d'état ou de valeur de paramètre supervisé.

Des objets graphiques peuvent être représentatifs d'historiques de valeurs d'un paramètre supervisé. Dans ce cas, le dispositif coordinateur 102 doit initialement requérir auprès du dispositif collecteur 110 autant de valeurs que la profondeur de l'historique le nécessite. Le dispositif coordinateur 102 peut pour ce faire indiquer si c'est la dernière valeur du paramètre supervisé qui est requise, ou une valeur antérieure et laquelle.

L'algorithme de la Fig. 4 est interrompu et le dispositif coordinateur 102 libère les ressources mémoires utilisées pour l'exécution de cet algorithme, lorsque la connexion avec le dispositif de restitution 130 est rompue.

La Fig. 5 illustre schématiquement un algorithme mis en oeuvre par le dispositif coordinateur 102 pour sélectionner un dispositif collecteur afin de récupérer les valeurs d'un paramètre supervisé.

Dans une étape 501, le dispositif coordinateur 102 sélectionne un dispositif collecteur primaire parmi des dispositifs collecteurs possibles pour récupérer les valeurs du paramètre supervisé.

Dans une étape 502 suivante, le dispositif coordinateur 102 vérifie si la connexion avec le dispositif collecteur primaire est opérante. Par exemple, si aucune réponse à une requête n'est reçue, après une période de temps donnée et éventuellement après plusieurs tentatives, la connexion avec le dispositif collecteur primaire est considérée comme rompue, sinon elle est considérée comme opérante. Si tel est le cas, l'étape 501 est réitérée et la récupération des valeurs du paramètre supervisé se poursuit avec le dispositif collecteur primaire ; sinon, le dispositif coordinateur 102 sélectionne un dispositif collecteur secondaire parmi les dispositifs collecteurs possibles restants pour récupérer les valeurs du paramètre supervisé. L'étape 502 est alors réitérée pour déterminer si la connexion avec le dispositif collecteur primaire est rétablie.

D'autres mises en oeuvre sont possibles, notamment en faisant en sorte qu'un dispositif collecteur secondaire devienne dispositif collecteur primaire si sa connexion avec le dispositif coordinateur 102 est opérante, dans l'étape 503.

Le même processus peut être mis en oeuvre par le dispositif collecteur 110 pour obtenir des valeurs de paramètre supervisé auprès d'un dispositif de capture. Dans ce cas, le dispositif collecteur 110 effectue sa sélection de dispositif de capture parmi plusieurs dispositifs de capture possibles pour récupérer les valeurs du paramètre supervisé, en fonction de l'état des connexions avec ces dispositifs de capture.

La Fig. 6 illustre schématiquement un algorithme mis en oeuvre par un dispositif de restitution, tel que le dispositif de restitution 130.

Dans une étape 601, le dispositif de restitution 130 s'authentifie auprès du dispositif coordinateur 102 en lui communiquant éventuellement son type de dispositif de restitution, et établit une connexion avec le dispositif coordinateur 102.

Dans une étape 602 suivante, le dispositif de restitution 130 reçoit du dispositif coordinateur 102 des objets logiciels O et/ou des objets graphiques G. Les objets graphiques G, éventuellement après application des règles contenues dans les objets logiciels O, sont affichés sur un écran dans une étape 603 suivante. Cela constitue l'interface utilisateur dans son état initial.

Dans une étape 604 suivante, le dispositif de restitution 130 se met en attente de réception d'un nouvel objet logiciel O ou graphique G, révélateur d'un changement d'état ou de valeur d'un paramètre supervisé.

Lorsqu'un tel objet est reçu, dans une étape 605 suivante, le dispositif de restitution 130 détermine si l'objet reçu est un objet graphique G ou un objet logiciel O. Si tel est le cas, une étape 606 est effectuée ; sinon, une étape 608 est effectuée.

Dans l'étape 606, le dispositif de restitution 130 analyse la structure de données S comprise dans l'objet logiciel O reçu, en déterminant notamment l'état du paramètre, tel qu'indiqué dans la structure de données S. Le dispositif de restitution 130 détermine le rendu de l'objet graphique G associé au paramètre, en fonction au moins dudit état et des règles de rendu comprises dans l'objet logiciel O reçu.

Dans une étape 607 suivante, le dispositif de restitution 130 ajuste l'affichage de l'interface utilisateur avec l'objet graphique G déterminé. L'étape 604 est alors répétée, dans laquelle le dispositif de restitution 130 se remet en attente de réception d'un nouvel objet logiciel O ou graphique G, révélateur d'un changement d'état ou de valeur d'un paramètre supervisé.

Dans l'étape 608, le dispositif de restitution 130 affiche l'objet graphique G reçu. L'étape 604 est alors répétée, dans laquelle le dispositif de restitution 130 se remet en attente de réception d'un nouvel objet logiciel O ou graphique G, révélateur d'un changement d'état ou de valeur d'un paramètre supervisé.

L'algorithme de la Fig. 6 est interrompu et le dispositif de restitution 130 libère les ressources mémoires utilisées pour l'exécution de cet algorithme, lorsque la connexion avec le dispositif coordinateur 102 est rompue.

Dans un mode de réalisation particulier, de manière à permettre de gérer indépendamment plusieurs systèmes de supervision avec une même plateforme de dispositif coordinateur 102 et/ou de dispositif configurateur 103, des espaces client sont créés. Chaque espace client est associé avec un ensemble d'objets logiciels O, ce qui implique que ledit espace client est aussi associé avec les structures de données S et les objets graphiques G relatifs à ces objets logiciels O. Ainsi, un utilisateur ne peut accéder, via un dispositif de restitution qu'aux informations de supervision qui relèvent de l'espace client qui le concerne.

Pour ce faire, chaque espace client est défini par l'opérateur du système de supervision au sein du dispositif configurateur 103. Lorsque l'utilisateur accède aux services du dispositif configurateur 103 pour définir l'interface utilisateur permettant la restitution des informations de supervision, il ne peut sélectionner que des objets associés à cet espace client. Le dispositif configurateur 103 permet alors de définir l'interface utilisateur de restitution des informations de supervision en fonction des identifiants d'espace client contenus dans les objets logiciels O. L'herméticité des systèmes de supervision de différents utilisateurs est ainsi assurée, bien qu'utilisant une même plateforme de dispositif coordinateur 102 et/ou de dispositif configurateur 103. Un même objet logiciel O peut toutefois être associé à plusieurs espaces client.

Dans un mode de réalisation, un même serveur implémente un ou plusieurs dispositifs de capture, ainsi que chaque dispositif collecteur associé. Chaque structure de données S et chaque objet logiciel O correspondant comporte alors un identifiant ID construit comme suit :

$$ID = NOM\_SERVEUR + INSTANCE\_DISPOSITIF\_CAPTURE + NOM\_HOST + NOM\_SERVICE$$

où NOM_SERVEUR est un nom ou un identifiant unique attribué au serveur par l'opérateur du système de supervision, INSTANCE_DISPOSITIF_CAPTURE est un nom ou un numéro d'instance unique sur le serveur permettant de distinguer plusieurs instances de dispositif de capture sur le serveur, NOM_HOST est un nom ou un identifiant unique d'un hôte fournissant le paramètre supervisé et NOM_SERVICE est un nom ou un identifiant unique du service associé à l'hôte.

Cet ID est connu par configuration du dispositif de capture concerné et est stocké en association avec les valeurs de paramètre supervisé dans la base de données 122, 124 correspondante.

Le dispositif configurateur 103 permet à l'opérateur d'appliquer un filtre sur chacune des composantes de cet identifiant ID, afin de définir les droits d'accès pour un espace client. Si le filtre est par exemple appliqué sur NOM_SERVEUR, l'utilisateur a accès aux informations de supervision relatives à toute instance de dispositif de capture présente sur ce serveur.

En d'autre termes, chaque objet logiciel O comporte un identifiant unique constitué de plusieurs champs parmi :

- un champ d'identification d'un serveur implémentant le dispositif de capture adapté pour capturer les valeurs du paramètre auquel l'objet logiciel est associé ;
- un champ d'identification du dispositif de capture sur ledit serveur ;
- un champ d'identification d'un hôte fournissant le paramètre supervisé ;
- un champ d'identification d'un service fournit par ledit hôte et auquel le paramètre supervisé est relatif.

Le dispositif configurateur 103 est alors adapté pour définir l'espace client par application d'un filtre sur au moins un desdits champs.

En outre, lorsqu'au moins le dispositif coordinateur 102 est localisé sur un site de l'opérateur du système de supervision et que des appareils fournissant les paramètres à superviser sont localisés sur un site de l'utilisateur, un réseau local virtuel de type VLAN (« Virtual Local Area Network » en anglais) peut être mis en oeuvre entre ces deux sites.

Selon un premier exemple, les dispositifs collecteurs 110, 111 et les dispositifs de capture 121, 123 sont localisés sur le site de l'utilisateur. Le réseau VLAN relie alors les dispositifs collecteurs 110, 111 et le dispositif coordinateur 102. L'identifiant d'espace client est alors stocké par pré-configuration dans une mémoire des dispositifs collecteurs 110, 111, qui insèrent cet identifiant dans chaque structure de données S transmise au dispositif coordinateur 102. Le réseau VLAN peut relier les dispositifs collecteurs 110, 111 et les dispositifs de capture 121, 123 si seulement ces derniers sont localisés sur le site de l'utilisateur. L'identifiant d'espace client est alors stocké par pré-configuration dans une mémoire des dispositifs de capture 121, 123, qui associent cet identifiant aux données stockées dans les bases de données 122, 124.

Selon un second exemple, les dispositifs collecteurs 110, 111 et les dispositifs de capture 121, 123 sont localisés sur le site de l'opérateur du système de supervision. Le réseau VLAN relie alors les dispositifs de capture 121, 123 et des appareils fournissant les paramètres à superviser localisés sur le site de l'utilisateur. L'identifiant d'espace client est alors stocké par pré-configuration dans une mémoire des dispositifs de capture 121, 123, qui associent cet identifiant aux données stockées dans les bases de données 122, 124.

Lorsque de tels réseaux VLAN sont mis en oeuvre, l'identifiant de réseau virtuel VLAN_ID, tel que défini par le standard IEEE 802.1Q, est préférentiellement utilisé comme identifiant d'espace client.

Il convient de noter que la mise en place de tels réseaux VLAN permet de simplifier la mise en oeuvre de tels systèmes de supervision et accroît la flexibilité de cette mise en oeuvre, en permettant de s'affranchir des adresses IP (« Internet Protocol » en anglais) des dispositifs localisés sur le site de l'utilisateur, lorsque le protocole IP est utilisé pour transmettre des données entre sites. Une partie des systèmes de supervision peut ainsi être mutualisée, même lorsque des plan d'adressage IP identiques sont utilisés sur des sites d'utilisateurs différents.

**Revendications**

1. Système de supervision (100) d'au moins un paramètre, ledit système étant destiné à fournir des informations de supervision de chaque dit paramètre à au moins un dispositif de restitution (130 ; 131), ledit système comportant au moins un dispositif collecteur (110 ; 111) adapté pour collecter des valeurs d'au moins un dit paramètre à différents instants, **caractérisé en ce qu'**il comporte en outre des moyens de configuration (103) d'au moins un seuil représentatif d'une transition entre deux états de chaque paramètre, et des moyens de coordination (102) adaptés pour :

    - recevoir (405) de chaque dispositif collecteur des structures de données, chaque structure de données comportant une valeur collectée d'un dit paramètre, ledit seuil et un état obtenu par comparaison entre ladite valeur collectée et ledit seuil ; et
    - fournir (409 ; 410) au dispositif de restitution lesdites informations de supervision sur la base des structures de données reçues.

2. Système de supervision selon la revendication 1, **caractérisé en ce que** les moyens de configuration permettent de configurer une interface utilisateur de restitution des informations de supervision, dans laquelle chaque paramètre est représenté par un objet graphique, et **en ce que** les moyens de configuration permettent de décrire chaque objet graphique par un objet logiciel comportant au moins une dite structure de données et des règles de rendu permettant de déterminer le rendu de chaque objet graphique en fonction de l'état dudit paramètre.

3. Système de supervision selon la revendication 2, **caractérisé en ce que** les moyens de coordination sont adaptés pour fournir au dispositif de restitution, pour au moins un dit paramètre, des objets logiciels comportant lesdites structures de données reçues.

**4.** Système de supervision selon l'une quelconque des revendications 2 et 3, **caractérisé en ce que** les moyens de coordination comportent des moyens de détermination de rendu d'objets graphiques en fonction de structures de données reçues par application desdites règles de rendu, et **en ce que** les moyens de coordination sont adaptés pour fournir au dispositif de restitution, pour au moins un dit paramètre, ledit objet graphique résultant de l'application desdites règles de rendu.

**5.** Système de supervision selon l'une quelconque des revendications 2 à 4, **caractérisé en ce que** des objets graphiques sont représentatifs d'historiques de valeurs de dits paramètres, et **en ce que** chaque dispositif collecteur stocke des structures de données pour chaque paramètre collecté à différents instants.

**6.** Système de supervision selon l'une quelconque des revendications 2 à 5, **caractérisé en ce que** des objets logiciels comportent plusieurs dites structures de données reçues correspondant à des paramètres distincts, et **en ce que** les moyens de configuration de ladite interface utilisateur comportent des moyens de définir des règles, incluses dans lesdits objets logiciels, de rendu desdits objets graphiques en fonction des états que comportent lesdites structures de données.

**7.** Système de supervision selon l'une quelconque des revendications 2 à 5, **caractérisé en ce que**, lorsqu'un dit dispositif collecteur détecte (203) une erreur de collecte d'une valeur de paramètre, ledit dispositif collecteur est adapté pour fournir (204, 208) aux moyens de coordination une dite structure de données dont la valeur de paramètre est représentative d'une erreur,
et **en ce que** le rendu de chaque objet graphique est représentatif d'une erreur, lorsque l'objet logiciel auquel l'objet graphique est associé comporte une telle structure de données.

**8.** Système de supervision selon l'une quelconque des revendications 1 à 7, **caractérisé en ce que** chaque dispositif collecteur est connecté à au moins un dispositif de capture et **en ce que** :

- chaque dispositif de capture est adapté pour capturer (301) et stocker (303) des valeurs de dit paramètre;
- chaque dispositif collecteur est adapté pour obtenir (205) auprès de chaque dispositif de capture lesdites valeurs stockées, ; et
- chaque dispositif collecteur est adapté pour générer (207) lesdites structures de données à partir des valeurs obtenues auprès de chaque dispositif de capture et pour fournir (208) lesdites structures de données auxdits moyens de coordination.

**9.** Système de supervision selon les revendications 2 et 8, **caractérisé en ce que**, lesdits moyens de coordination étant destinés à être partagés par plusieurs systèmes de supervision, l'interface utilisateur est associée à un espace client, chaque objet logiciel comporte un identifiant unique constitué de plusieurs champs parmi :

- un champ d'identification d'un serveur implémentant le dispositif de capture adapté pour capturer les valeurs du paramètre auquel l'objet logiciel est associé ;
- un champ d'identification du dispositif de capture sur ledit serveur ;
- un champ d'identification d'un hôte fournissant le paramètre supervisé ;
- un champ d'identification d'un service fournit par ledit hôte et auquel le paramètre supervisé est relatif,

et **en ce que** les moyens de configuration permettent de définir l'espace client par application d'un filtre sur au moins un desdits champs.

**10.** Procédé de supervision d'au moins un paramètre par un système de supervision (100), ledit système étant destiné à fournir des informations de supervision de chaque dit paramètre à au moins un dispositif de restitution (130 ; 131), ledit procédé comportant une étape de collecte par au moins un dispositif collecteur (110 ; 111) de valeurs d'au moins un dit paramètre à différents instants, **caractérisé en ce qu'**il comporte en outre une étape de configuration d'au moins un seuil représentatif d'une transition entre deux états de chaque paramètre, et les étapes suivantes :

- réception (405), par des moyens de coordination (102) et en provenance de chaque dispositif collecteur, de structures de données, chaque structure de données comportant une valeur collectée d'un dit paramètre, ledit seuil et un état obtenu par comparaison entre ladite valeur collectée et ledit seuil ; et
- fourniture (409 ; 410) au dispositif de restitution desdites informations de supervision sur la base des structures de données reçues.

**11.** Programme d'ordinateur, **caractérisé en ce qu'**il comprend des instructions causant une mise en oeuvre, par un système de supervision selon les revendications 1 à 9, du procédé selon la revendication 10, lorsque ledit programme est exécuté par au moins un processeur.

**12.** Moyens de stockage, **caractérisés en ce qu'**ils stockent un programme d'ordinateur comprenant des instructions causant une mise en oeuvre, par un système de supervision selon les revendications 1 à 9, du procédé selon la revendication 10, lorsque ledit programme est exécuté par au moins un processeur.

**Patentansprüche**

1. Überwachungssystem (100) mindestens eines Parameters, wobei das System dazu bestimmt ist, Informationen zur Überwachung jedes Parameters an mindestens eine Rückgewinnungsvorrichtung (130; 131) zu liefern, wobei das System mindestens eine Sammelvorrichtung (110; 111) umfasst, die dazu vorgesehen ist, Werte mindestens eines Parameters zu verschiedenen Zeitpunkten zu sammeln, **dadurch gekennzeichnet, dass** es ferner Mittel zur Konfiguration (103) mindestens einer Grenze, die für einen Übergang zwischen zwei Zuständen jedes Parameters repräsentativ ist, und Koordinationsmittel (102) umfasst, die dazu vorgesehen sind:

   - von jeder Sammelvorrichtung Datenstrukturen zu empfangen (405), wobei jede Datenstruktur einen gesammelten Wert eines Parameters, die Grenze und einen Zustand, der durch Vergleich zwischen dem gesammelten Wert und der Grenze erhalten wird, umfasst; und
   - an die Rückgewinnungsvorrichtung die Überwachungsinformationen auf Basis der empfangenen Datenstrukturen zu liefern (409; 410).

2. Überwachungssystem nach Anspruch 1, **dadurch gekennzeichnet, dass** es die Konfigurationsmittel ermöglichen, eine Benutzerschnittstelle zur Rückgewinnung der Überwachungsinformationen zu konfigurieren, in der jeder Parameter durch ein grafisches Objekt dargestellt ist, und dass es die Konfigurationsmittel ermöglichen, jedes grafische Objekt durch ein Software-Objekt zu beschreiben, umfassend mindestens eine Datenstruktur und Wiedergaberegeln, die es ermöglichen, die Wiedergabe jedes grafischen Objekts in Abhängigkeit vom Zustand des Parameters zu bestimmen.

3. Überwachungssystem nach Anspruch 2, **dadurch gekennzeichnet, dass** die Koordinationsmittel dazu vorgesehen sind, an die Rückgewinnungsvorrichtung für mindestens einen Parameter Software-Objekte zu liefern, die die empfangenen Datenstrukturen umfassen.

4. Überwachungssystem nach einem der Ansprüche 2 und 3, **dadurch gekennzeichnet, dass** die Koordinationsmittel Mittel zur Bestimmung einer Wiedergabe von grafischen Objekten in Abhängigkeit von empfangenen Datenstrukturen durch Anwendung der Wiedergaberegeln umfassen, und dass die Koordinationsmittel dazu vorgesehen sind, an die Rückgewinnungsvorrichtung für mindestens einen Parameter das grafische Objekt zu liefern, das sich aus der Anwendung der Wiedergaberegeln ergibt.

5. Überwachungssystem nach einem der Ansprüche 2 bis 4, **dadurch gekennzeichnet, dass** grafische Objekte für Wertehistorien von Parametern repräsentativ sind, und dass jede Sammelvorrichtung Datenstrukturen für jeden zu verschiedenen Zeitpunkten gesammelten Parameter speichert.

6. Überwachungssystem nach einem der Ansprüche 2 bis 5, **dadurch gekennzeichnet, dass** Software-Objekte mehrere empfangene Datenstrukturen entsprechend unterschiedlichen Parametern umfassen, und dass die Konfigurationsmittel der Benutzerschnittstelle Mittel umfassen, um in die Software-Objekte eingeschlossene Regeln für die Wiedergabe der grafischen Objekte in Abhängigkeit von den Zuständen, die die Datenstrukturen umfassen, zu definieren.

7. Überwachungssystem nach einem der Ansprüche 2 bis 5, **dadurch gekennzeichnet, dass**, wenn eine Sammelvorrichtung einen Sammelfehler eines Parameterwerts erfasst (203), die Sammelvorrichtung dazu vorgesehen ist, an die Koordinationsmittel eine Datenstruktur zu liefern (204, 208), deren Parameterwert für einen Fehler repräsentativ ist,
und dass die Wiedergabe jedes grafischen Objekts für einen Fehler repräsentativ ist, wenn das Software-Objekt, dem das grafische Objekt zugeordnet ist, eine solche Datenstruktur umfasst.

**8.** Überwachungssystem nach einem der Ansprüche 1 bis 7, **dadurch gekennzeichnet, dass** jede Sammelvorrichtung an mindestens eine Erfassungsvorrichtung angeschlossen ist, und dass:

- jede Erfassungsvorrichtung dazu vorgesehen ist, Werte eines Parameters zu erfassen (301) und zu speichern (303);
- jede Sammelvorrichtung dazu vorgesehen ist, bei jeder Erfassungsvorrichtung die gespeicherten Werte zu erhalten (205); und
- jede Sammelvorrichtung dazu vorgesehen ist, die Datenstrukturen aus den bei jeder Erfassungsvorrichtung erhaltenen Werten zu erzeugen (207), und die Datenstrukturen an die Koordinationsmittel zu liefern (208).

**9.** Überwachungssystem nach den Ansprüchen 2 und 8, **dadurch gekennzeichnet, dass**, wobei die Koordinationsmittel dazu bestimmt sind, von mehreren Überwachungssystemen geteilt zu werden, die Benutzerschnittstelle einem Kundenraum zugeordnet ist, wobei jedes Software-Objekt einen einzigen Identifikator umfasst, der von mehreren Feldern unter den folgenden gebildet ist:

- einem Feld zur Identifikation eines Servers, der die Erfassungsvorrichtung implementiert, die dazu vorgesehen ist, die Werte des Parameters zu erfassen, dem das Software-Objekt zugeordnet ist;
- einem Feld zur Identifikation der Erfassungsvorrichtung auf dem Server;
- einem Feld zur Identifikation eines Hosts, der den überwachten Parameter liefert;
- einem Feld zur Identifikation eins vom Host gelieferten Dienstes, zu dem der überwachte Parameter in Relation steht,
und dass es die Konfigurationsmittel ermöglichen, den Kundenraum durch Anwendung eines Filters an mindestens einem der Felder zu definieren.

**10.** Verfahren zur Überwachung mindestens eines Parameters durch ein Überwachungssystem (100), wobei das System dazu bestimmt ist, Informationen zur Überwachung jedes Parameters an mindestens eine Rückgewinnungsvorrichtung (130; 131) zu liefern, wobei das Verfahren einen Schritt des Sammelns durch mindestens eine Sammelvorrichtung (110; 111) von Werten mindestens eines Parameters zu verschiedenen Zeitpunkten umfasst, **dadurch gekennzeichnet, dass** es ferner einen Schritt der Konfiguration mindestens einer Grenze, die für einen Übergang zwischen zwei Zuständen jedes Parameters repräsentativ ist, und die folgenden Schritte umfasst:

- Empfang (405) von den Koordinationsmitteln (102) und von jeder Sammelvorrichtung von Datenstrukturen, wobei jede Datenstruktur einen gesammelten Wert eines Parameters, die Grenze und einen Zustand, der durch Vergleich zwischen dem gesammelten Wert und der Grenze erhalten wird, umfasst; und
- Lieferung (409; 410) an die Rückgewinnungsvorrichtung der Überwachungsinformationen auf Basis der empfangenen Datenstrukturen.

**11.** Computerprogramm, **dadurch gekennzeichnet, dass** es Anweisungen umfasst, die einen Einsatz des Verfahrens nach Anspruch 10 durch ein Überwachungssystem nach den Ansprüchen 1 bis 9 hervorrufen, wenn das Programm von mindestens einem Prozessor ausgeführt wird.

**12.** Speichermittel, **dadurch gekennzeichnet, dass** sie ein Computerprogramm speichern, umfassend Anweisungen, die einen Einsatz des Verfahrens nach Anspruch 10 durch ein Überwachungssystem nach den Ansprüchen 1 bis 9 hervorrufen, wenn das Programm von mindestens einem Prozessor ausgeführt wird.

**Claims**

**1.** Supervision system (100) for supervising at least one parameter, said system being intended to provide supervision information in respect of each said parameter to at least one rendition device (130; 131), said system comprising at least one collector device (110; 111) adapted to collect values of at least one said parameter at various instants, **characterized in that** it furthermore comprises configuration means (103) for configuring at least one threshold representative of a transition between two states of each parameter, and coordination means (102) adapted to:

- receive (405) data structures from each collector device, each data structure comprising a collected value of a said parameter, said threshold and a state obtained by comparison between said collected value and said threshold; and
- provide (409; 410) said supervision information to the rendition device on the basis of the data structures received.

2. Supervision system according to Claim 1, **characterized in that** the configuration means make it possible to configure a user interface for rendering the supervision information, in which each parameter is represented by a graphical object, and **in that** the configuration means make it possible to describe each graphical object by a software object comprising at least one said data structure and rendition rules making it possible to determine the rendition of each graphical object as a function of the state of said parameter.

3. Supervision system according to Claim 2, **characterized in that** the coordination means are adapted to provide to the rendition device, for at least one said parameter, software objects comprising said data structures received.

4. Supervision system according to either one of Claims 2 and 3, **characterized in that** the coordination means comprise means for determining rendition of graphical objects as a function of data structures received by applying said rendition rules, and **in that** the coordination means are adapted to provide to the rendition device, for at least one said parameter, said graphical object resulting from the application of said rendition rules.

5. Supervision system according to any one of Claims 2 to 4, **characterized in that** graphical objects are representative of histories of values of said parameters, and **in that** each collector device stores data structures for each parameter collected at various instants.

6. Supervision system according to any one of Claims 2 to 5, **characterized in that** software objects comprise several said data structures received corresponding to distinct parameters, and **in that** the means of configuration of said user interface comprise means for defining rules, included in said software objects, of rendition of said graphical objects as a function of the states that said data structures comprise.

7. Supervision system according to any one of Claims 2 to 5, **characterized in that**, when a said collector device detects (203) an error in collecting a parameter value, said collector device is adapted to provide (204, 208) to the coordination means a said data structure whose parameter value is representative of an error,
and **in that** the rendition of each graphical object is representative of an error, when the software object with which the graphical object is associated comprises such a data structure.

8. Supervision system according to any one of Claims 1 to 7, **characterized in that** each collector device is connected to at least one capture device and **in that**:

    - each capture device is adapted to capture (301) and store (303) values of said parameter;
    - each collector device is adapted to obtain (205) said stored values from each capture device; and
    - each collector device is adapted to generate (207) said data structures on the basis of the values obtained from each capture device and to provide (208) said data structures to said coordination means.

9. Supervision system according to Claims 2 and 8, **characterized in that**, said coordination means being intended to be shared by several supervision systems, the user interface is associated with a client space, each software object comprises a unique identifier consisting of several fields from among:

    - a field for identifying a server implementing the capture device adapted to capture the values of the parameter with which the software object is associated;
    - a field for identifying the capture device on said server;
    - a field for identifying a host providing the supervised parameter;
    - a field for identifying a service provided by said host and to which the supervised parameter relates,

and **in that** the configuration means make it possible to define the client space by applying a filter to at least one of said fields.

10. Method for supervising at least one parameter via a supervision system (100), said system being intended to provide supervision information in respect of each said parameter to at least one rendition device (130; 131), said method comprising a step of collecting via at least one collector device (110; 111) values of at least one said parameter at various instants, **characterized in that** it furthermore comprises a step of configuring at least one threshold representative of a transition between two states of each parameter, and the following steps:

- reception (405), by coordination means (102) and originating from each collector device, of data structures, each data structure comprising a collected value of a said parameter, said threshold and a state obtained by comparison between said collected value and said threshold; and
- provision (409; 410) to the rendition device of said supervision information on the basis of the data structures received.

11. Computer program, **characterized in that** it comprises instructions causing an implementation, by a supervision system according to Claims 1 to 9, of the method according to Claim 10, when said program is executed by at least one processor.

12. Storage means, **characterized in that** they store a computer program comprising instructions causing an implementation, by a supervision system according to Claims 1 to 9, of the method according to Claim 10, when said program is executed by at least one processor.

104

102 ⟷ 103

100

131

101

130

110    111

122    121    123    124

Fig. 1A

150 CPU    151 RAM    152 ROM

153    154

160

Fig. 1B

Recevoir une requête du
dispositif coordinateur — 201

Transmettre une requête à un
dispositif de capture — 202

oui — Erreur ? — non

203

Générer une structure
d'erreur E

204

Recevoir la valeur
requise — 205

Déterminer un état — 206

Générer une structure
de données S — 207

Transmettre la structure (S ou E) au
dispositif coordinateur — 208

Fig. 2

Capturer une valeur de paramètre — 301

Horodater la valeur — 302

Stocker la valeur horodatée — 303

Effacer les valeurs périmées — 304

Fig. 3A

Recevoir une requête du collecteur 311

Fournir les données stockées
dans la base de données 312

Fig. 3B

Détecter une connexion avec un
dispositif de restitution 401

Obtenir des objets d'interface associés 402

Transmettre les objets d'interface
au dispositif de restitution 403

Transmettre une requête à un
collecteur 404

Recevoir une structure (S ou E) du collecteur 405

**non** Différente ? **oui**

406

**non** Objet particulier ? **oui**

407

Analyser la structure
(S ou E) 408

Transmettre l'objet
graphique au dispositif de
restitution 409

Transmettre l'objet logiciel
incluant la structure (S ou E)
au dispositif de restitution 410

Fig. 4

Sélectionner un collecteur primaire  501

**oui**  Connexion OK ?  502

**non**

Sélectionner un collecteur secondaire  503

## Fig. 5

Etablir une connexion avec le dispositif coordinateur  601

Recevoir des objets d'interface  602

Afficher les objets d'interface  603

Attendre réception  604

**oui**  Objet logiciel ?  **non**  605

Analyser la structure de données  606

Ajuster l'affichage de l'objet d'interface  607

Afficher l'objet graphique reçu  608

## Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7437453 B2
- US 7478151 B1